# EUROPÄISCHE PATENTSCHRIFT

(11) **EP 2 539 203 B1**
(45) Veröffentlichungstag und Bekanntmachung des Hinweises auf die Patenterteilung: **03.09.2014**
(21) Anmeldenummer: 11703812.5
(22) Anmeldetag: 20.01.2011
(51) Int. Cl.: B62D 1/184

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION RÉGLABLE POUR UN VÉHICULE AUTOMOBILE

(30) Priorität: 22.02.2010 DE 102010000504
(43) Veröffentlichungstag der Anmeldung: 02.01.2013
(73) Patentinhaber: ThyssenKrupp Presta Aktiengesellschaft, 9492 Eschen (LI)
(72) Erfinder: HUBER, Sebastian, A-6811 Göfis (AT)
(74) Vertreter: Hofmann, Ralf U.
(86) Internationale Anmeldenummer: PCT/AT2011/000034
(87) Internationale Veröffentlichungsnummer: WO 2011/100770

(56) Entgegenhaltungen:
- WO-A1-2009/141045
- DE-A1- 3 138 083
- DE-A1- 4 345 099
- JP-A- 2000 127 987
- US-A- 5 941 129

## Beschreibung

Die Erfindung bezieht sich auf eine verstellbare Lenksäule für ein Kraftfahrzeug mit einer Spannvorrichtung, in deren geöffnetem Zustand die Lenksäule verstellbar ist und in deren geschlossenem Zustand die eingestellte Position der Lenksäule fixiert ist und die einen Betätigungshebel und einen eine Längsachse aufweisenden Spannbolzen aufweist, wobei ein Spannteil, welches zum Öffnen und Schließen der Spannvorrichtung vom Betätigungshebel um die Längsachse des Spannbolzens drehbar ist, auf dem Spannbolzen angeordnet ist oder einstückig mit diesem ausgebildet ist, und wobei der Spannbolzen und/oder das Spannteil eine Verzahnung aufweist bzw. aufweisen, welche die Längsachse des Spannbolzens umgibt und deren Zähne in Richtung der Längsachse des Spannbolzens verlaufen und der Betätigungshebel mit einer aus Kunststoff bestehenden Fügefläche bzw. einer jeweiligen solchen Fügefläche auf die Verzahnung des Spannbolzens und/oder auf die Verzahnung des Spannteils aufgepresst ist, wobei die Zähne der Verzahnung bzw. der jeweiligen Verzahnung in die Fügefläche bzw. in die jeweilige Fügefläche des Betätigungshebels zumindest teilweise eingegraben sind. Weiters bezieht sich die Erfindung auf ein Verfahren zur Befestigung eines Betätigungshebels einer Spannvorrichtung einer verstellbaren Lenksäule für ein Kraftfahrzeug an einem Spannbolzen und/oder einen Spannteil der Spannvorrichtung, in deren geöffnetem Zustand die Lenksäule verstellbar ist und in deren geschlossenem Zustand die eingestellte Position der Lenksäule fixiert ist und zu deren Öffnen und Schließen das Spannteil vom Betätigungshebel um die Längsachse des Spannbolzens drehbar ist, wobei der Spannbolzen und/oder das Spannteil mit einer Verzahnung versehen wird bzw. werden, welche die Längsachse des Spannbolzens bzw. des Spannteils umgibt und deren Zähne in Richtung der Längsachse des Spannbolzens bzw. Spannteils verlaufen und der Betätigungshebel mit einer aus Kunststoff bestehenden Fügefläche bzw. einer jeweiligen solchen Fügefläche auf die Verzahnung des Spannbolzens und/oder auf die Verzahnung des Spannteils aufgepresst wird, wobei die Zähne der Verzahnung bzw. der jeweiligen Verzahnung sich in die Fügefläche bzw. in die jeweilige Fügefläche des Betätigungshebels zumindest teilweise eingraben.

Verstellbare Lenksäulen für Kraftfahrzeuge sind in vielen unterschiedlichen Ausführungsformen bekannt. In einer üblichen Ausführungsform wird die Verstellbarkeit der Lenksäule durch Verdrehung eines Betätigungshebels um die Längsachse eines Spannbolzens gelöst oder gesperrt. Vom Betätigungshebel wird ein Spannteil um die Achse des Spannbolzens gedreht, welches beispielsweise von einer Nockenscheibe gebildet wird, die mit einer Nockenfolgerscheibe zusammenwirkt. Zur Feststellung der Verstellung im geschlossenen Zustand der vom Betätigungshebel betätigten Spannvorrichtung können beispielsweise durch die Spannvorrichtung miteinander verspannte Reibflächen zur kraftschlüssigen Feststellung oder durch die Spannvorrichtung zusammengeführte Verzahnungen zur formschlüssigen Feststellung vorgesehen sein. Die Verstellbarkeit kann sich auf die axiale Richtung der Lenksäule und/oder die Neigungsverstellung bzw. Höhenverstellung beziehen.

Eine verstellbare Lenksäule geht beispielsweise aus der DE 101 41 551 A1 hervor. Die Spannvorrichtung umfasst einen Betätigungshebel, einen Spannbolzen, auf dem der Betätigungshebel verdrehbar angeordnet ist, ein ebenfalls auf dem Spannbolzen verdrehbar angeordnetes Spannstück in Form einer Nockenscheibe und eine mit dieser zusammenwirkende Nockenfolgerscheibe. Der Betätigungshebel ist mit dem Spannstück durch Zapfen des Spannstücks, die in Ausnehmungen des Betätigungshebels eingreifen formschlüssig verbunden. Dieser Formschluss stellt zum einen die Positionierung des Betätigungshebels sicher und überträgt zum anderen die für das Öffnen und Schließen der Spannvorrichtung notwendige Kraft vom Betätigungshebel auf das Spannstück. Um für den Fall eines Fahrzeugcrashes den Schutz des Fahrzeugführers zu verbessern, ist ein Hebelteil des Betätigungshebels mit einem Lagerteil des Betätigungshebels, über welches die verdrehbare Lagerung auf dem Spannbolzen erfolgt, über einen Abreißmechanismus verbunden. Durch diesen kann sich das Hebelteil im Crashfall vom Lagerteil lösen.

Bei der aus der EP 1 747 966 A2 bekannten verstellbaren Lenksäule ist der Betätigungshebel ebenfalls formschlüssig mit einer Nockenscheibe verbunden, wobei die Nockenscheibe einen rechteckigen Vorsprung aufweist, der in eine rechteckige Ausnehmung des Betätigungshebels eingepresst ist. Eine Nockenfolgerscheibe, gegenüber der die Nockenscheibe zum Öffnen und Schließen der Spannvorrichtung vom Betätigungshebel verdreht wird, weist Anschläge für die Nocken der Nockenscheibe auf, welche im Crashfall umgebogen werden können. Dadurch kann sich die Nockenscheibe im Crashfall weiter gegenüber der Nockenfolgerscheibe verdrehen, wodurch auch die Verdrehung des Betätigungshebels ermöglicht wird, um im Crashfall den Fahrerschutz zu verbessern.

Aus der WO 2009/141 045 A1 geht eine einstückige Ausbildung eines in Form einer Nockenscheibe ausgebildeten Spannteils mit einem Spannbolzen einer Spannvorrichtung hervor, die zum Feststellen einer verstellbaren Lenksäule für ein Kraftfahrzeug dient. Auf der den Nocken gegenüberliegenden Seite ist am Spannteil eine Formkontur ausgebildet und der Betätigungshebel ist mit einer Vertiefung mit einer korrespondierenden Form ausgebildet, wodurch eine formschlüssige Verbindung mit dem Betätigungshebel hergestellt wird. Bei der Verdrehung des Betätigungshebels wird damit das einstückig mit dem Spannbolzen ausgebildete Spannteil mitgenommen.

Nachteilig bei diesen vorbekannten Lenksäulen ist es, dass der Betätigungshebel in seiner Drehlage gegenüber dem Spannteil von vorneherein festgelegt ist und etwaige Toleranzen der Bauteile zu veränderten Dreheinstellungen des Betätigungshebels für den geöffneten bzw. geschlossenen Zustand der Spannvorrichtung führen. Auch die Montage kann je nach Ausführung aufwendig sein, wenn der Betätigungshebel mit dem Spannteil vormontiert werden muss und anschließend die Baugruppe in die Lenksäulenbaugruppe montiert werden muss.

Weitere Vorschläge zur Verbesserung des Schutzes des Fahrzeugführers im Fall eines Fahrzeugcrashes gehen aus der WO 03/018 384 A1 und US 7,125,046 B2 hervor. In der erstgenannten Schrift ist der Betätigungshebel als Deformationselement ausgebildet, so dass er durch einen Aufprall unter Energieaufnahme deformierbar ist. Die US 7,125,046 B2 zeigt eine verstellbare Lenksäule, bei der sich im Crashfall das Mantelrohr in Richtung zur Fahrzeugfront verschieben kann.

Aus der JP 2000 127 987 A geht eine verstellbare Lenksäule der eingangs genannten Art hervor. Der Betätigungshebel, der eine Öffnung aufweist, deren innere Oberfläche einen vollumfänglich verzahnten Abschnitt und einen teilumfänglich verzahnten Abschnitt umfasst, wird axial auf ein Spannteil aufgeschoben, das einen vollumfänglich verzahnten Abschnitt und einen teilumfänglich verzahnten Abschnitt aufweist. Zunächst gelangen der vollumfänglich verzahnte Abschnitt des Betätigungshebels und der vollumfänglich verzahnte Abschnitt des Spannteils in Eingriff. Beim weiteren Aufschieben des Betätigungshebels wird der teilumfänglich verzahnte Abschnitt des Betätigungshebels auf den vollumfänglich verzahnten Abschnitt des Spannteils und der vollumfänglich verzahnte Abschnitt des Betätigungshebels auf den teilumfänglich verzahnten Abschnitt des Spannteils aufgepresst.

Die US 5,941,129 A zeigt eine verstellbare Lenksäule, deren Spannvorrichtung ein Spannteil aufweist, das mit einem kegelstumpfförmig ausgebildeten Abschnitt ausgebildet ist. Dieser kegelstumpfförmige Abschnitt ist mit einer Außenverzahnung versehen, deren Zähne somit geneigt zur Längsachse des Spannbolzens verlaufen. Durch Aufschrauben einer Spannmutter auf einem Gewindefortsatz des Spannteils wird ein Betätigungshebel mit einer konischen Ausnehmung auf den kegelstumpfförmigen Abschnitt des Spannteils aufgepresst. Es kommt hierbei zu einem Zahneingriff zwischen dem kegelstumpfförmigen Abschnitt des Spannteils und der konischen Ausnehmung des Spannhebels.

Aufgabe der Erfindung ist es, eine verstellbare Lenksäule der eingangs genannten Art bereit zu stellen, durch die eine einfache Ausbildung und Montage ermöglicht wird und bei der der Betätigungshebel in einer beliebigen Winkellage montierbar ist. Erfindungsgemäß gelingt dies durch eine verstellbare Lenksäule mit den Merkmalen des Anspruchs 1 bzw. durch ein Verfahren mit den Merkmalen des Anspruchs 10.

Bei der Lenksäule gemäß der Erfindung weist der Betätigungshebel mindestens eine aus Kunststoff bestehende zylindrische Fügefläche auf, welche im fertig montierten Zustand der Lenksäule die Längsachse des Spannbolzens vollumfänglich umgibt. Der Spannbolzen und/oder das Spannteil weist mindestens eine Verzahnung auf, welche die Längsachse des Spannbolzens umgibt und deren Zähne in Richtung der Längsachse des Spannbolzens verlaufen (falls das Spannteil eine solche Verzahnung aufweist, so ist die Anordnung der Verzahnung um die Längsachse des Spannbolzens und der Verlauf der Zähne in Längsrichtung des Spannbolzens auf den fertig montierten Zustand der Lenksäule bezogen). Der Betätigungshebel ist mit der Fügefläche bzw. einer jeweiligen Fügefläche auf die Verzahnung des Spannbolzens und/oder Spannteils aufgepresst und die Zähne dieser Verzahnung sind hierbei in die Fügefläche bzw. jeweilige Fügefläche des Betätigungshebels zumindest teilweise eingegraben. Es wird dadurch eine formschlüssige Verbindung ausgebildet, die gegen eine Verdrehung des Betätigungshebels gegenüber der Verzahnung um die Achse des Spannbolzens wirkt. Vorteilhafterweise wird weiters eine kraftschlüssige Verbindung ausgebildet, die gegen eine Verschiebung des Betätigungshebels gegenüber der Verzahnung in axialer Richtung des Spannbolzens wirkt. Eine zusätzliche auf den Spannbolzen aufgeschraubte Sicherungsmutter gegen ein axiales Abziehen des Betätigungshebels kann vorgesehen sein.

Der Betätigungshebel kann insgesamt aus Kunststoff bestehen. Auch eine Ausbildung von nur einem Teil des Betätigungshebels, der die mindestens eine Fügefläche aufweist, aus Kunststoff ist möglich.

In einer möglichen Ausführungsform der Erfindung kann der Betätigungshebel auf eine Verzahnung des als separates Teil ausgebildeten Spannteils aufgepresst sein und das Spannteil und der Betätigungshebel können gemeinsam um die Längsachse des Spannbolzens drehbar auf diesem gelagert sein. Auch eine drehfeste Anordnung auf dem Spannbolzen ist möglich.

In einer anderen möglichen Ausführungsform kann der Betätigungshebel auf eine Verzahnung des Spannbolzens aufgepresst sein, so dass dieser bei der Verdrehung des Betätigungshebels mitgedreht wird und die Übertragung der Verschwenkung des Betätigungshebels über den Spannbolzen auf das Spannteil übertragen wird. Das Spannteil kann.hierzu drehfest mit dem Spannbolzen verbunden sein oder einstückig mit diesem ausgebildet sein.

Falls das Spannteil als vom Spannbolzen separates Teil ausgebildet ist und drehfest mit dem Spannbolzen verbunden ist, so ist es hierfür bevorzugt, dass das Spannteil auf eine Verzahnung des Spannbolzens aufgepresst ist, welche die Längsachse des Spannbolzens umgibt und deren Zähne in Richtung der Längsachse des Spannbolzens verlaufen, wobei die Zähne der Verzahnung in eine den Spannbolzen umgebenden Fügefläche des Spannteils zumindest teilweise eingegraben sind. Der Betätigungshebel und das Spannteil sind hierbei günstigerweise auf unterschiedliche axiale Abschnitte der gleichen Verzahnung des Spannbolzens aufgepresst. Die Fügefläche des Spannteils ist bevorzugterweise aus Metall ausgebildet.

Durch die erfindungsgemäße Ausbildung ist die Drehlage des Betätigungshebels frei bestimmbar und auch keiner Rasterung unterworfen, wie dies durch allfällige Eingriffe von an beiden Teilen ausgebildeten ineinander eingreifenden Verzahnungen bedingt wäre. Es wird eine sehr einfache Montage ermöglicht, bei der die Lenksäule vormontiert wird und nach der Montage der übrigen Teile der Spannvorrichtung der Betätigungshebel in der gewünschten Drehlage aufgepresst wird.

Der Kraft- und Formschluss des Betätigungshebels gegenüber der mindestens einen Verzahnung, die in die mindestens eine aus Kunststoff bestehende Fügefläche des Betätigungshebels zumindest teilweise eingegraben ist, muss ausreichend stark sein, dass er die Betätigungskräfte des Betätigungshebels für das Öffnen und Schließen der Spannvorrichtung übertragen kann. Auch bei Missbrauchsfällen auftretende Kräfte müssen im ausreichenden Ausmaß aufgenommen werden können.

Vorteilhafterweise ist der Kraft- und Formschluss des Betätigungshebels gegenüber der mindestens einen Verzahnung, auf der er festgesetzt ist, so ausgelegt, dass der Betätigungshebel bei Überschreiten eines Grenzwertes eines zwischen dem Betätigungshebel und dem Spannteil wirkenden Drehmoments gegenüber dem Spannteil um die Längsachse des Spannbolzens verdrehbar ist. Bei einem den Grenzwert überschreitenden Drehmoment wird Kunststoff im Bereich der Fügefläche, in den die Zähne der Verzahnung zumindest teilweise eingegraben sind, abgeschert, wodurch sich der Betätigungshebel gegenüber der Verzahnung um die Längsachse des Spannbolzens verdrehen kann. Es kann dadurch für den Fall eines Fahrzeugcrashes ein vorteilhafter Schutz für den Fahrzeugführer bereitgestellt werden. Günstigerweise bleibt der Betätigungshebel auch nach Überschreiten des Grenzwertes des Drehmoments auf dem Spannbolzen bzw. auf den Spannteil angeordnet, d. h. es besteht eine Bewegungsmöglichkeit des Betätigungshebels nur in einem Freiheitsgrad, eben im Sinne einer Drehung um die Längsachse des Spannbolzens.

Vorzugsweise beträgt der Grenzwert des Drehmoments, oberhalb von dem der Betätigungshebel gegenüber dem Spannteil verdrehbar ist, mindestens 7,5 Nm, wobei ein Wert von mindestens 12 Nm bevorzugt ist. Um genügende Sicherheit auch im Missbrauchsfall zu erhalten, sind Grenzwerte des Drehmoments, oberhalb von dem der Betätigungshebel gegenüber dem Spannteil verdrehbar ist, von mindestens 15 Nm besonders zu bevorzugen.

Die verstellbare Lenksäule gemäß der Erfindung kann in herkömmlicher Weise eine Trageinheit, die mit dem Chassis des Kraftfahrzeugs verbindbar ist, und eine die Lenkspindel drehbar lagernde Stelleinheit umfassen, welche im geöffneten Zustand der Spannvorrichtung gegenüber der Trageinheit zur Einstellung der Position der Lenksäule verstellbar ist und im geschlossenen Zustand der Spannvorrichtung in ihrer eingestellten Position gegenüber der Trageinheit festgestellt ist. Diese Stelleinheit kann insbesondere von einem die Lenkspindel drehbar lagernden Mantelrohr gebildet werden oder ein solches aufweisen.

Wenn sich bei Überschreiten des Grenzwertes des zwischen dem Betätigungshebel und dem Spannteil wirkenden Drehmoments der Betätigungshebel gegenüber dem Spannteil verdreht, so bleibt vorzugsweise die Spannvorrichtung geschlossen. Das Spannteil verdreht sich also nicht, da es gegen eine Verdrehung durch einen entsprechenden Anschlag, der insbesondere am Gegenspannteil angeordnet ist, abgestützt ist. Wenn die Spannvorrichtung somit gespannt bleibt, kann die Lenksäule entsprechend der Auslegung der Spannvorrichtung Kräfte gegenüber ihren Verstellrichtungen aufnehmen. Insbesondere können diese Kräfte derart hoch ausgelegt sein, dass die Lenksäule im Crashfall durch einen Aufprall des Fahrers nicht gegenüber der Trageinheit verschoben wird und beispielsweise die Funktion des Airbags voll gewährleistet ist. Auf diese Weise wird einerseits die Gefährdung durch den Betätigungshebel verringert und andererseits kann die Energie beim Aufprall des Fahrers auf die Lenksäule, wie im Stand der Technik bekannt, durch Absorptionselemente zwischen Trageinheit und karosseriefester Halterung kontrolliert absorbiert werden.

Im geöffneten Zustand der Spannvorrichtung kann die Lenksäule in ihre Längsrichtung und/oder in ihrer Neigung bzw. in der Höhe verstellbar sein.

Wenn das zwischen dem Betätigungshebel und dem Spannteil wirkende Drehmoment den Grenzwert überschreitet, so wird dies als "Crashfall" bezeichnet. Solange dieser Grenzwert nicht überschritten worden ist, liegt der "Normalbetrieb" der Lenksäule vor.

Der Begriff "Verzahnung" ist im Rahmen dieser Schrift breit zu verstehen. Die Zähne können unterschiedliche spitz zulaufende oder auch abgerundete Formen aufweisen. Solche Zähne können in unterschiedlicher Weise eingebracht sein, beispielsweise durch Einfräsen oder auch durch eine Materialumformung, insbesondere Rändeln bzw. Längsrändeln.

Weitere Vorteile und Einzelheiten der Erfindung werden im Folgenden anhand der beiliegenden Zeichnung erläutert. In dieser zeigen:
- Fig. 1: eine Schrägsicht einer Lenksäule gemäß dem Stand der Technik, in einer teilweise auseinandergezogenen Darstellung;
- Fig. 2: einen modifizierten Spannbolzen mit einem angeformten Spannteil zum alternativen Einsatz in der Lenksäule von Fig. 1, ebenfalls gemäß dem Stand der Technik;
- Fig. 3: ein erstes Ausführungsbeispiel einer erfindungsgemäßen Lenksäule, in Schrägsicht, in einer teilweise auseinandergezogenen Darstellung;
- Fig. 4 und 5: Schrägsichten des Spannteils und eines Teils des Stellhebels in größerem Detail;
- Fig. 6: eine Schrägsicht des Spannbolzens mit dem darauf montierten Spannteil und Stellhebel;
- Fig. 7: einen Schnitt entlang der Linie AA von Fig. 6;
- Fig. 8: einen Schnitt entlang der Linie BB von Fig. 7;
- Fig. 9: einen Schnitt entsprechend Fig. 8, wobei im Crashfall eine Verdrehung des Betätigungshebels gegenüber dem Spannbolzen erfolgt ist;
- Fig. 10 und 11: Darstellungen entsprechend Fig. 7 von zwei gegenüber dem ersten Ausführungsbeispiel modifizierten Ausführungsformen;
- Fig. 12: eine Schrägsicht eines Spannbolzens mit einem auf diesem befestigten Spannteil gemäß einer vierten Ausführungsform der Erfindung;
- Fig. 13: eine Darstellung entsprechend Fig. 7 dieser vierten Ausführungsform der Erfindung;
- Fig. 14: eine Schrägsicht des Spannteils und eines Teils des Betätigungshebels gemäß einer fünften Ausführungsform der Erfindung;
- Fig. 15: eine Schrägsicht eines Teils des Betätigungshebels gemäß der fünften Ausführungsform der Erfindung aus einer gegenüber Fig. 14 unterschiedlichen Blickrichtung.

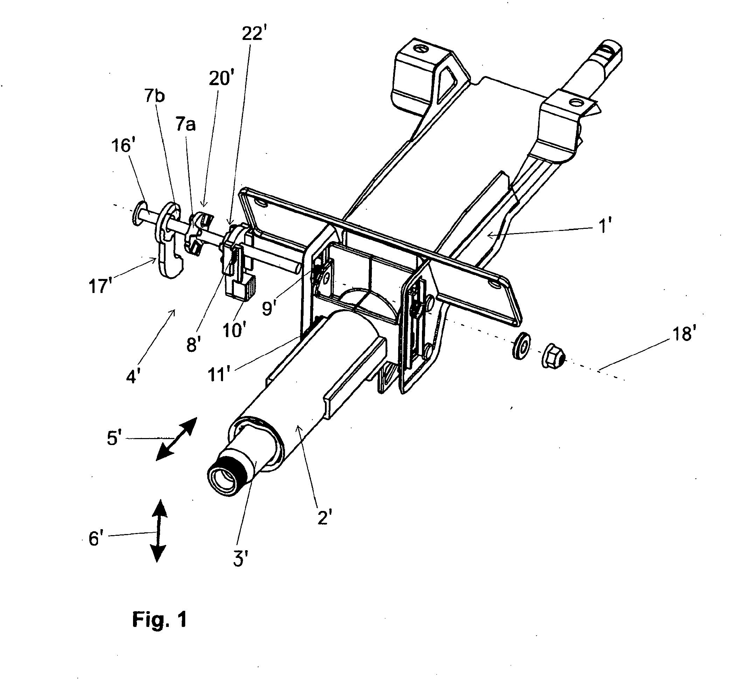

Fig. 1 zeigt eine verstellbare Lenksäule gemäß dem Stand der Technik. Im geöffneten Zustand einer Spannvorrichtung 4' ist eine Stelleinheit 2', die die Lenkspindel 3' drehbar lagert gegenüber einer chassisfesten Trageinheit 1' in die Längsrichtung 5' und in die Stellrichtung 6' der Höhen- bzw. Neigungsverstellung verstellbar und im geschlossenen Zustand der Spannvorrichtung 4' ist die Stelleinheit 2' gegenüber der Trageinheit 1' durch ineinandergreifende Verzahnungen 8' - 11' festgestellt. Zum Öffnen und Schließen der Spannvorrichtung 4' dient ein auf einem Spannbolzen 16' der Spannvorrichtung drehbar angeordneter Betätigungshebel 17', der hierzu ein in Form einer Nockenscheibe ausgebildetes Spannteil 20' um die Längsachse 18' des Spannbolzens 16' verdreht. Das Spannteil 20' wirkt mit einem in Form eines Nockenfolgers ausgebildeten Gegenspannteil 22' zusammen. Zur drehfesten Verbindung zwischen dem Betätigungshebel 17' und dem Spannteil 20' weist dieses Vorsprünge 7a auf, die in Vertiefungen 7b des Betätigungshebels 17' eingreifen.

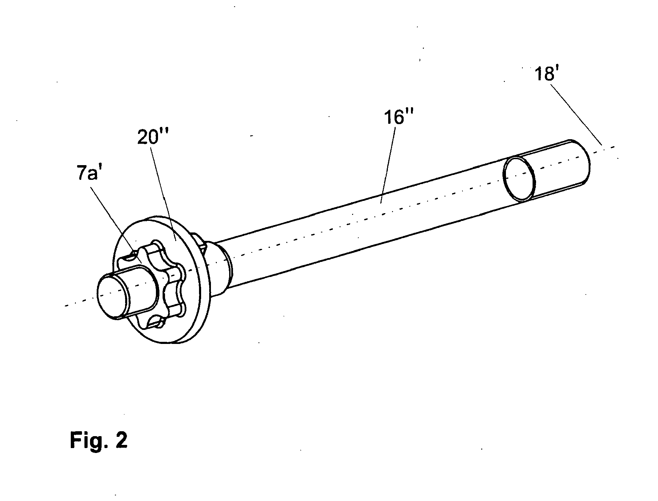

Fig. 2 zeigt eine modifizierte Ausführung gemäß dem Stand der Technik. Hier ist das Spannteil 20" einstückig mit dem Spannbolzen 16" ausgebildet, also an diesem angeformt. Auf der von den Nocken 21 abgelegenen Seite ist ein Vorsprung 7a' mit einem von der Kreisform abweichenden Querschnitt ausgebildet, der in eine korrespondierende Vertiefung im Betätigungshebel eingreift.

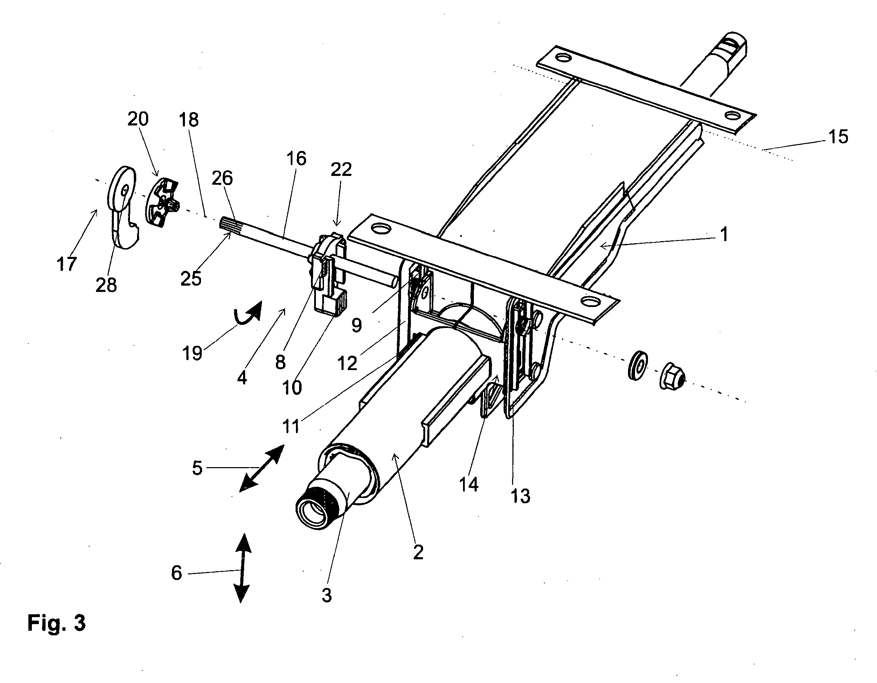

Ein erstes Ausführungsbeispiel der Erfindung ist in den Fig. 3 bis 9 dargestellt. Abgesehen vom Betätigungshebel 17, Spannteil 20 und Spannbolzen 16 ist die Ausbildung gleich wie bei der Lenksäule gemäß dem Stand der Technik von Fig. 1.

Die in Fig. 3 dargestellte Lenksäule umfasst eine Trageinheit 1, die mit dem Chassis des Kraftfahrzeugs verbindbar ist, und eine Stelleinheit 2, die einen an das lenkradseitige Ende der Lenksäule anschließenden Abschnitt der Lenkspindel 3 drehbar lagert. Die Stelleinheit 2 ist in Form eines Mantelrohrs ausgebildet.

Im geöffneten Zustand einer Spannvorrichtung 4 ist die Stelleinheit 2 in Längsrichtung 5 der Lenksäule (=in Richtung der Längsachse der Lenkspindel 3) für eine Längenverstellung der Lenksäule und in die Stellrichtung 6 für eine Höhe- bzw. Neigungsverstellung der Lenksäule gegenüber der Trageinheit 1 verstellbar. Im geschlossenen Zustand der Spannvorrichtung 4 ist die eingestellte Position der Stelleinheit 2 gegenüber der Trageinheit 1 festgestellt. Zur Feststellung der Verstellung dienen beispielsweise, wie dargestellt, ineinandergreifende Verzahnungen 8-11. Stattdessen könnten zur Feststellung auch Reibflächen vorgesehen sein. Auch andere formschlüssig wirkende Feststellelemente sind bekannt und könnten eingesetzt werden. Weiters können zur Feststellung auch Kombinationen von formschlüssig und reibschlüssig wirkenden Elementen eingesetzt werden. Zur Erhöhung der Anzahl der Reibflächen können auch nach Art von Lamellenkupplungen zusammenwirkende Lamellen vorgesehen sein. Die Verzahnungen und/oder anderen Feststellelemente können ein- oder beidseitig bezüglich der Längsmittelachse vorgesehen sein. Alle diese Ausbildungen sind bekannt.

Die Stelleinheit 2 ist zwischen Seitenwangen 12, 13 der Trageinheit 1 angeordnet. Im gezeigten Ausführungsbeispiel ist weiters zwischen der Trageinheit 1 und der Stelleinheit 2 eine Zwischeneinheit 14 angeordnet. Die Zwischeneinheit 14 ist im geöffneten Zustand der Spannvorrichtung 4 gegenüber der Trageinheit 1 in die der Höhen- bzw. Neigungsverstellung entsprechende Stellrichtung 6 verstellbar. Hierzu ist sie um eine Schwenkachse 15, deren Ausbildung im gezeigten Ausführungsbeispiel nicht im Einzelnen dargestellt ist, gegenüber der Trageinheit 1 verschwenkbar. In die Längsrichtung 5 der Lenksäule ist die Zwischeneinheit 14 gegenüber der Trageinheit 1 unverschiebbar. Im geöffneten Zustand der Spannvorrichtung 4 ist weiters die Stelleinheit 2 in Längsrichtung 5 gegenüber der Zwischeneinheit 14 zur Längeneinstellung der Lenksäule verstellbar. In die Stellrichtung 6 ist die Stelleinheit 2 gegenüber der Zwischeneinheit 14 unverstellbar.

Im geschlossenen Zustand der Spannrichtung 4 sind die Seitenwangen 12, 13 der Trageinheit 1 gegen die Zwischeneinheit 14 verspannt.

Es ist dabei möglich, die Verbindung der Trageinheit 1 mit dem Chassis des Kraftfahrzeuges und/oder die Verbindung der Zwischeneinheit 14 mit der Trageinheit 1 und/oder die Verbindung der Stelleinheit 2 mit der Zwischeneinheit 14 unter Zwischenschaltung bekannter Crashenergieabsorptionseinrichtungen darzustellen. Da die Energieabsorption der Lenksäule im Crashfall nicht Kern der Erfindung ist, sind derartige Mechanismen hier nicht weiter dargestellt. Der Fachmann kann aber aus den Techniken zur Energieabsorption nach eigenem Ermessen geeignete Mechanismen auswählen und mit der erfindungsgemäßen Lösung kombiniert in eine Lenksäule integrieren.

Die Ausbildung mit einer Trageinheit 1, Stelleinheit 2 und dazwischenliegender Zwischeneinheit 14 in der beschriebenen Form ist bekannt. Eine solche Zwischeneinheit 14 könnte auch entfallen, wie dies ebenfalls bekannt ist. Im geschlossenen Zustand der Spannvorrichtung 4 werden die Seitenwangen 12, 13 dann direkt an die Stelleinheit 2 angedrückt.

Die Spannvorrichtung 4 umfasst einen quer zur Lenkspindel 3, insbesondere rechtwinklig zur Längsrichtung 5 der Lenksäule, verlaufenden Spannbolzen 16, der Öffnungen in den Seitenwangen 12, 13 durchsetzt. Zur Ermöglichung der Höhen- bzw. Neigungsverstellung sind die vom Spannbolzen 16 durchsetzten Öffnungen in den Seitenwangen 12, 13 als in die Stellrichtung 6 verlaufende Langlöcher ausgebildet. Der Spannbolzen 16 durchsetzt weiters Öffnungen in der Zwischeneinheit 14. Er könnte auch Öffnungen in der Stelleinheit 2 durchsetzen, insbesondere bei Ausbildungen, bei denen eine Zwischeneinheit 14 entfällt. Diese Öffnungen in der Stelleinheit 2 wären zur Ermöglichung einer Längsverstellung der Lenksäule als in die Längsrichtung 5 verlaufende Langlöcher ausgebildet.

Eine erfindungsgemäße Lenksäule könnte auch nur in die Längsrichtung 5 oder nur in die der Höhen- bzw. Neigungsverstellung entsprechende Stellrichtung 6 verstellbar sein.

Zum Öffnen und Schließen der Spannvorrichtung 4 wird ein vom Benutzer betätigbarer Betätigungshebel 17 um die Längsachse 18 des Spannbolzens 16 verschwenkt. Durch die weiter unten beschriebene formschlüssige Verbindung des Betätigungshebels 17 mit.dem Spannbolzen 16 nimmt der Betätigungshebel 17 hierbei den Spannbolzen 16 mit, dieser dreht sich somit ebenfalls um seine Längsachse 18. Durch die ebenfalls weiter unten beschriebene drehfeste Verbindung zwischen dem Spannbolzen 16 und einem auf ihm angeordneten Spannteil 20 wird dieses bei der Verschwenkung des Betätigungshebels 17 ebenfalls um die Längsachse 18 des Spannbolzens 16 gedreht. Das Spannteil 20 ist im gezeigten Ausführungsbeispiel in Form einer Nockenscheibe mit mindestens einem Nocken 21, vorzugsweise mindestens zwei Nocken 21, ausgebildet.

Das Spannteil 20 wirkt mit einem Gegenspannteil 22 zusammen, welches um die Längsachse 18 unverdrehbar gehalten ist, im gezeigten Ausführungsbeispiel durch mit der Seitenwange 12 zusammenwirkenden Führungsleisten 23, die von der Seitenwange 12 (beispielsweise den Rändern der vom Spannbolzen 16 durchsetzten Öffnung, an denen sie anliegen) in die Stellrichtung 6 verschiebbar geführt sind. Das Gegenspannteil 22 ist im gezeigten Ausführungsbeispiel in Form einer Kulissenscheibe bzw. eines Nockenfolgers ausgebildet und weist mindestens eine Schrägfläche 24 zum Zusammenwirken mit dem mindestens einen Nocken 21 des Spannteils 20 auf.

Bei der Verdrehung des Spannteils 20 in die Schließ-Drehrichtung 19 von der Offenstellung in die Schließstellung der Spannvorrichtung 4 werden die bezogen auf die Längsachse 18 des Spannbolzens 16 aneinander abgelegenen Enden des Spannteils 20 und des Gegenspannteils 22 weiter voneinander distanziert. Somit wird mindestens eines dieser Teile 20, 22 in axialer Richtung der Drehachse 18 verschoben.

Das Öffnen und Schließen einer Spannvorrichtung 4 in dieser Weise mittels eines Spannteils 20 und Gegenspannteils 22 ist bekannt. Es könnte auch die umgekehrte Anordnung vorgesehen sein, d. h. das Gegenspannteil 22 weist mindestens einen Nocken auf und das Spannteil 20 ist als Kulissenscheibe bzw. Nockenfolger ausgebildet und besitzt mindestens eine Schrägfläche zum Zusammenwirken mit dem mindestens einen Nocken. Daneben sind auch andere Ausbildungen von Spannteilen 20, 22 zum Öffnen und Schließen der Spannvorrichtung 4 durch axiale Verschiebung mindestens eines dieser Teile bei der Verdrehung des Spannteils 20 gegenüber dem Gegenspannteil 22 denkbar und möglich und auch bekannt. So könnten zwischen dem Spannteil 20 und dem Gegenspannteil 22 in bekannter Weise Kipphebel oder Wälzkörper angeordnet sein, die in Führungsbahnen laufen, von denen zumindest eine einen geneigten Boden aufweist.

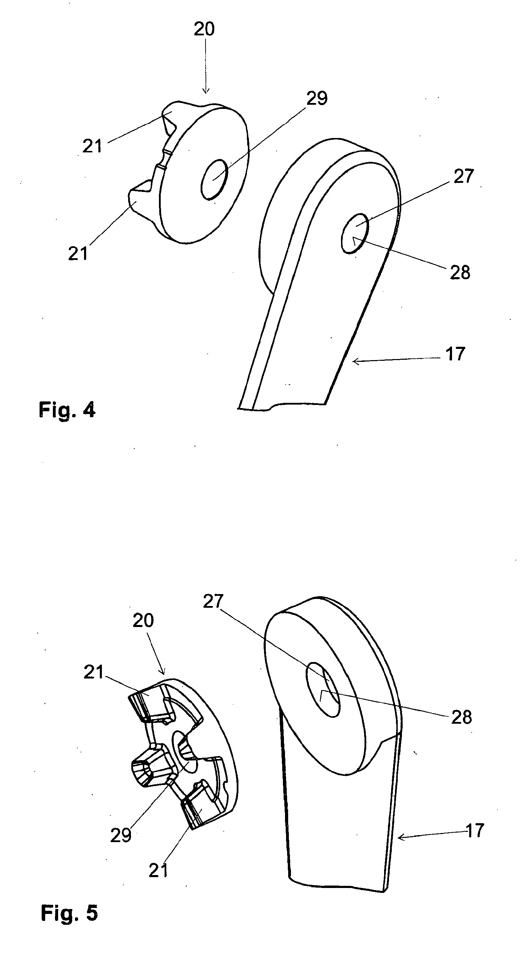

Wenn die Spannvorrichtung 4 geschlossen ist, so ist eine weitere Verdrehung des Spannteils 20 in die Schließdrehrichtung 19 blockiert. Im gezeigten Ausführungsbeispiel liegt hierzu der mindestens eine Nocken 21 an einem Anschlag des Gegenspannteils 22 an. Aus Fig. 3 gehen der Spannbolzen 16, der Betätigungshebel 17 und das Spannteil 20 im noch voneinander getrennten Zustand hervor. Das Gegenspannteil 22 ist bereits auf dem Spannbolzen 16 angeordnet und ein Rundloch im Gegenspannteil 22 wird vom Spannbolzen 16 mit geringem Spiel durchsetzt, so dass der Spannbolzen 16 gegenüber dem Gegenspannteil 22 um seine Längsachse 18 verdrehbar ist. Die Fig. 4 und 5 zeigen das Spannteil 20 und einen Teil des Betätigungshebels 17 im größeren Detail.

Der Spannbolzen 16 weist an seinem äußeren Umfang eine Verzahnung 25 auf, welche somit die Längsachse 18 des Spannbolzens 16 umgibt. Die Zähne 26 der Verzahnung verlaufen parallel zur Längsachse 18. Der Betätigungshebel 17 besteht aus Kunststoff und weist eine Durchtrittsöffnung 27 mit kreisförmigem Querschnitt auf. Der Durchmesser der Durchtrittsöffnung 27 ist vor dem Aufpressen auf die Verzahnung 25 etwas kleiner als der Außendurchmesser der Verzahnung 25, beispielsweise um einen Wert kleiner, der zwischen der Höhe der Zähne 26 und der doppelten Höhe der Zähne 26 liegt.

Im die Durchgangsöffnung 27 umgebenden Bereich kann der Betätigungshebel 17 bezogen auf die axiale Richtung des Spannbolzens 16 verdickt ausgebildet sein, wie dies in den Fig. 4 und 5 dargestellt ist, wobei die Verdickung einstückig mit dem restlichen Teil des Betätigungshebels 17 ausgebildet sein kann oder von einem separaten, mit dem restlichen Teil des Betätigungshebels 17 starr verbundenen Teil gebildet werden kann.

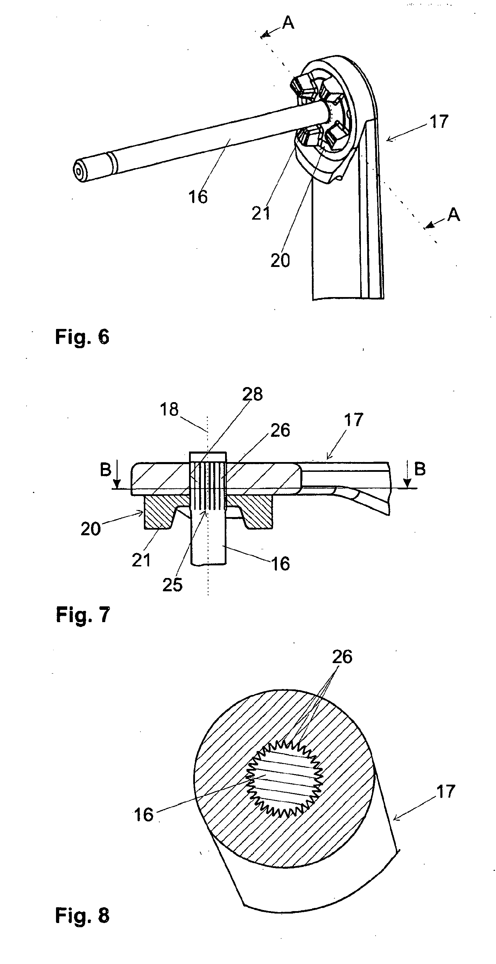

Zum Fügen des Betätigungshebels 17 mit dem Spannbolzen 16 wird der Betätigungshebel 17 in Richtung der Längsachse 18 des Spannbolzens 16 auf die Verzahnung 15 aufgepresst. Hierbei graben sich die Zähne 26 der Verzahnung in die von der Mantelfläche der Durchtrittsöffnung gebildete Fügefläche 28 des Betätigungshebels 17 zumindest über einen Teil ihrer Höhe ein, wie dies in Fig. 8 dargestellt ist. Es wird dadurch eine in Umfangsrichtung formschlüssige Verbindung hergestellt, über welche der Spannbolzen 16 drehfest mit dem Betätigungshebel 17 verbunden ist.

Zur Erleichterung des axialen Aufpressens des Betätigungshebels 17 auf die Verzahnung 25 kann die Verzahnung 25 und/oder die Durchtrittsöffnung 27 mit einer Fase versehen sein, welche eine Anlaufschräge bildet (nicht dargestellt in den Figuren).

Die Verbindung nach dem Aufpressen des Betätigungshebels 17 auf die Verzahnung 25 wirkt auch kraftschlüssig, so dass der Betätigungshebel 17 gegen ein axiales Abziehen vom Spannbolzen 16 gesichert ist.

Das Spannteil 20 ist im Ausführungsbeispiel ebenfalls drehfest mit dem Spannbolzen 16 verbunden. Hierzu ist das Spannteil 20, welches vorzugsweise insgesamt aus Metall besteht, mit einer Durchtrittsöffnung 29 auf einen Abschnitt der Verzahnung 25 aufgepresst, der dem Abschnitt der Verzahnung 25 axial benachbart liegt, auf welchen der Betätigungshebel 17 aufgepresst ist. Die Zähne 26 der Verzahnung 25 graben sich beim axialen Aufpressen des Spannteils 20 mehr oder weniger in die Mantelfläche der Durchtrittsöffnung 29 ein, wodurch eine in Umfangsrichtung formschlüssige Verbindung zwischen dem Spannteil 20 und dem Spannbolzen 16 ausgebildet wird. Die Verbindung ist auch kraftschlüssig, so dass das Spannteil 20 gegen eine axiale Verschiebung auf dem Spannbolzen 16 gesichert ist. Alternativ kann das Spannteil 20 auch auf andere Weise mit dem Spannbolzen 16 verbunden sein, beispielsweise durch Schweißen, Kleben, Aufpressen oder ein Montageverfahren. Auch eine Kombination von Fügeverfahren ist denkbar und möglich.

Der vom Betätigungshebel 17 beim Öffnen und Schließen der Spannvorrichtung 4 gedrehte Spannbolzen 16 dreht somit durch Drehung des Betätigungshebels 17 auch das Spannteil 10, so dass sich dieses gegenüber dem Gegenspannteil 22 verdreht.

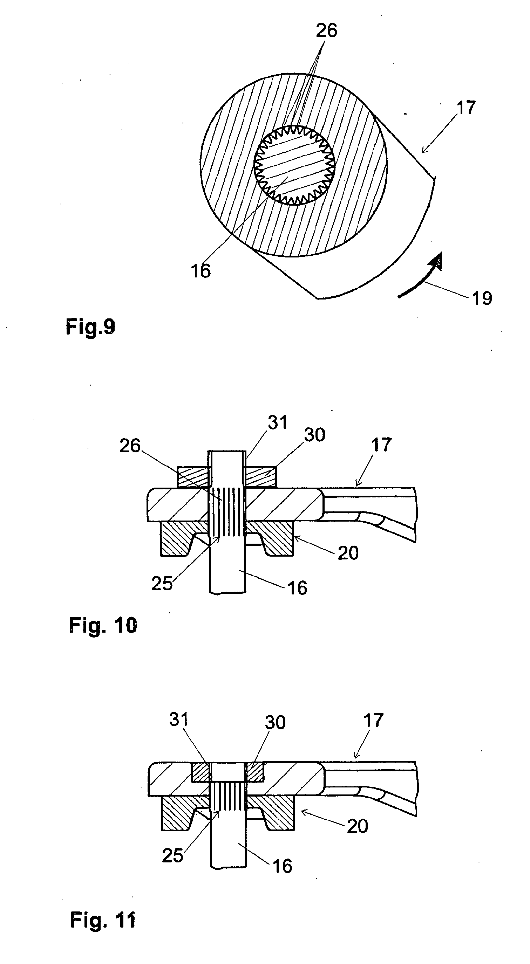

Wenn zwischen dem Betätigungshebel 17 und dem Spannbolzen 16 ein Drehmoment wirkt, welches einen bestimmten Grenzwert überschreitet, so kommt es zu einem Abscheren der zwischen den in das Kunststoffmaterial des Betätigungshebels 17 eingegrabenen Zähne 26 stehengebliebenen Vorsprünge aus Kunststoffmaterial durch die Zähne 26 und der Betätigungshebel 17 verdreht sich gegenüber dem Spannbolzen 16. Dies ist in Fig. 9 dargestellt. Zu solch einem Drehmoment kommt es insbesondere im Fall eines Fahrzeugcrashes, wenn durch die sekundäre Kollision des Fahrers von diesem auf den Betätigungshebel 17 eine ausreichend große Kraft ausgeübt wird. Diese Kraft wird im Allgemeinen mehr oder weniger zur Fahrzeugfront gerichtet sein. Das auf den Betätigungshebel 17 ausgeübte Drehmoment wirkt in die Schließ-Drehrichtung 19 und der Betätigungshebel 17 verschwenkt sich in die Schließ-Drehrichtung 19, wobei die Spannvorrichtung hierbei geschlossen bleibt, so dass die eingestellte Position der Lenksäule erhalten bleibt. Der Betätigungshebel 17 wird auch nach der Verdrehung gegenüber dem Spannteil 20 auf dem Spannbolzen 16 angeordnet bleiben.

Zur zusätzlichen Sicherung des Betätigungshebels 17 gegen ein axiales Abziehen vom Spannbolzen 16 kann eine Sicherungsmutter 30 vorgesehen sein, wie dies in den Fig. 10 und 11 dargestellt ist. Die Verzahnung 25 endet im Abstand vom Ende des Spannbolzens 16 und zwischen der Verzahnung 25 und dem benachbarten Ende des Spannbolzens 16 ist dieser mit einem Gewinde 31 versehen, auf welches die Sicherungsmutter 30 aufgeschraubt ist. In der Ausführungsform von Fig. 10 liegt diese an der Seitenfläche des Betätigungshebels 17 an, in der Ausführungsform von Fig. 11 ist die Seitenfläche des Betätigungshebels 17 mit einer Vertiefung versehen, in welcher die Sicherungsmutter 30 versenkt angeordnet ist.

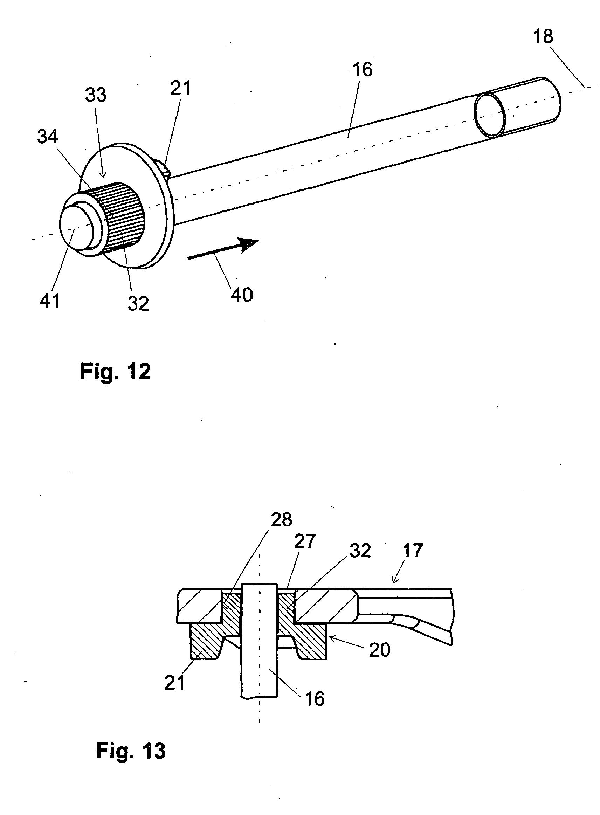

Eine weitere Ausführungsform der Erfindung ist in den Fig. 12 und 13 dargestellt. Abgesehen von den folgenden Unterschieden ist die Ausbildung gleich wie bei den zuvor beschriebenen Ausführungsformen. Analoge Teile sind mit den gleichen Bezugszeichen wie zuvor versehen.

Das Spannteil 20 ist wiederum drehfest mit dem Spannbolzen 16 verbunden, beispielsweise in der zuvor beschriebenen Art und Weise. Auch hier sind alternative Fügeverfahren, wie sie beispielsweise in anderen Ausführungsvarianten erläutert sind, denkbar und möglich. So könnte auch hier das Spannteil 20 beispielsweise auch mit dem Spannbolzen 16 verschweißt sein. Das Spannteil 20 besitzt hier einen hülsenartigen, in axialer Richtung des Spannteils 20 sich erstreckenden Fortsatz 32, der vom Spannbolzen 16 durchsetzt wird. Die äußere Oberfläche des Fortsatzes 32 ist mit einer Verzahnung 33 versehen, deren Zähne 34 in axialer Richtung des Spannbolzens 16 verlaufen. Die Verzahnung 33 umgibt die Längsachse 41 des Spannteils 20 und somit im montierten Zustand des Spannteils 20 die Längsachse 18 des Spannbolzens 16, mit der die Längsachse 41 des Spannteils 20 dann zusammenfällt.

Der aus Kunststoff bestehende Betätigungshebel 17 ist wie zuvor mit einer im Querschnitt kreisförmigen Durchtrittsöffnung 27 versehen. Der Durchmesser der Durchtrittsöffnung 27 ist etwas geringer als der Außendurchmesser der Verzahnung 33, beispielsweise um einen Wert kleiner, der zwischen der Höhe der Zähne 34 und der doppelten Höhe der Zähne 34 liegt. Die aus Kunststoff bestehende Mantelfläche der Durchtrittsöffnung 27 bildet eine Fügefläche 28, mit der der Betätigungshebel 17 auf die Verzahnung 33 aufgepresst ist, wobei sich die Zähne 34 mehr oder weniger in die Fügefläche 28 eingraben. Die Richtung 40 des Aufpressens des Betätigungshebels 17 ist in Fig. 12 durch einen Pfeil angedeutet.

Der Betätigungshebel 17 ist in diesem Ausführungsbeispiel somit unmittelbar mit dem Spannteil 20 drehfest verbunden und die auf den Betätigungshebel 17 ausgeübten Betätigungskräfte werden direkt auf das Spannteil 20 übertragen. Vorzugsweise wird diese drehfeste Verbindung im Crashfall bei Überschreiten eines Grenzwertes des Drehmoments wiederum zerstört, so dass der Betätigungshebel 17 vom Fahrer gegenüber dem Spannteil 20 verdrehbar ist, völlig analog wie bei den Ausführungsformen der Fig. 3 bis 11.

Wenn das Spannteil 20 und der Betätigungshebel 17 am Spannbolzen 16 endseitig gegen eine axiale Verschiebung gesichert werden, beispielsweise durch einen Kopf des Spannbolzens 16 oder durch eine Anschlagmutter, so könnten das Spannteil 20 und der Betätigungshebel 17 gemeinsam in diesem Ausführungsbeispiel auch gegenüber dem Spannbolzen 16 verdrehbar sein. Beim Öffnen und Schließen der Spannvorrichtung 4 würde der Spannbolzen 16 somit nicht mitgedreht.

In einem weiteren Ausführungsbeispiel könnte das Spannteil 20 auch einstückig mit dem Spannbolzen 16 ausgebildet sein, also an diesem angeformt sein. Beispielsweise könnte der Spannbolzen 16 mit dem angeformten Spannteil 20 in der in Fig. 12 dargestellten Weise ausgebildet sein.

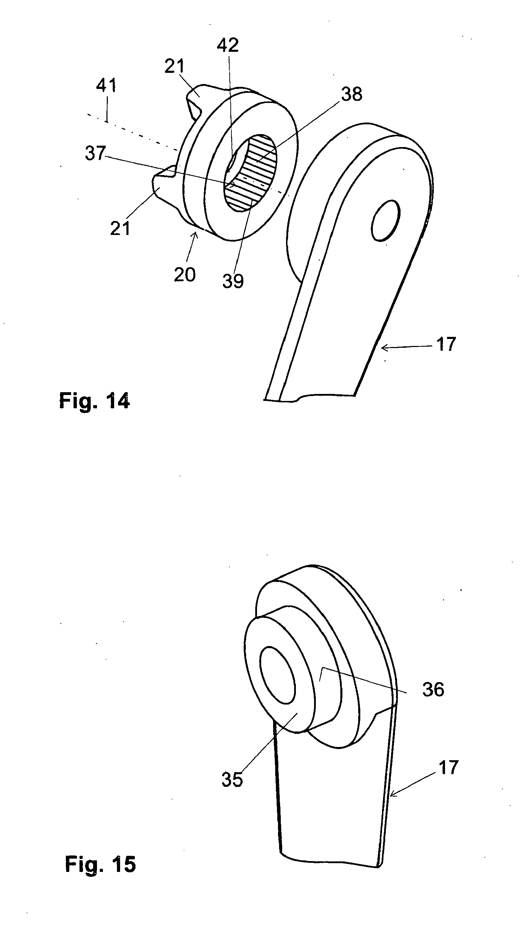

Ein weiteres Ausführungsbeispiel der Erfindung ist in den Fig. 14 und 15 dargestellt. Wiederum erfolgt die drehfeste Verbindung des Betätigungshebels 17 direkt mit dem Spannteil 20. Der aus Kunststoff bestehende Betätigungshebel 17 besitzt hier einen zapfenförmigen, in axialer Richtung des Spannbolzens 16 sich erstreckenden Fortsatz 35. Dessen äußere Oberfläche bildet hier eine Fügefläche 36, auf welche die Verzahnung 37 des Spannteils 20 axial aufgepresst wird. Die Verzahnung 37 ist hier als Innenverzahnung ausgebildet und auf der Mantelfläche einer Vertiefung 38 im Spannteil 20 angeordnet. Die Verzahnung 37 umgibt im montierten Zustand der Lenksäule wiederum die Längsachse 18 des Spannbolzens 16 und die Zähne 39 der Verzahnung 37 verlaufen im montierten Zustand der Lenksäule in Richtung der Längsachse 18 des Spannbolzens 16. Das Spannteil 20 besteht aus Metall. Der Außendurchmesser des im Querschnitt kreisförmigen Fortsatzes 35 ist etwas größer als der Innendurchmesser der Verzahnung 37, beispielsweise um einen Wert größer, der zwischen der Höhe der Zähne 34 und der doppelten Höhe der Zähne 34 liegt, wobei sich die Zähne 39 beim axialen Aufpressen des Spannteils 20 mehr oder weniger in die Fügefläche 36 eingraben.

Entsprechend dieser Ausführungsform kann das Spannteil 20 mit dem Spannbolzen 16 mit einem Fügeverfahren verbunden sein oder um den Spannbolzen 16 drehbar gelagert angeordnet sein. Hierzu kann das Spannteil 20 eine Ausnehmung 42 aufweisen, die sich in der Längachse 41 des Spannteils 20 an die Vertiefung 38 anschließt. Diese Ausnehmung kann als Lagerung zur Lagerung auf dem Spannbolzen 16 oder als Befestigungsabschnitt zur Befestigung auf dem Spannbolzen ausgebildet sein. Alternativ kann das Spannteil auch einstückig mit dem Spannbolzen ausgebildet sein.

Unterschiedliche Modifikationen der gezeigten Ausführungsbeispiele sind denkbar und möglich, ohne den Bereich der Erfindung zu verlassen. So könnte der Betätigungshebel beispielsweise auch nur teilweise aus Kunststoff bestehen, z. B. nur in einem Abschnitt im Bereich der Fügefläche 28, 36.

Als Kunststoff, aus dem der Betätigungshebel 17 zumindest im Bereich der Fügefläche 28, 36 besteht, kann beispielsweise ein glasfaserverstärkter Polyamid-Kunststoff, z. B. PA66GF50 eingesetzt werden.

Die Verzahnung 25, 33, 37, auf die der Betätigungshebel 17 aufgepresst wird, kann in unterschiedlicher Weise ausgebildet sein, beispielsweise durch einen Fräsvorgang oder durch Rändeln. Es können unterschiedliche Zahnformen mit spitz zulaufenden oder abgerundeten Zähnen eingesetzt werden.

Denkbar und möglich wäre es beispielsweise auch, dass der Betätigungshebel 17 eine aus Kunststoff bestehende erste Fügefläche, mit der der Betätigungshebel 17 auf eine Verzahnung des Spannbolzens aufgepresst ist, und eine aus Kunststoff bestehende zweite Fügefläche aufweist, mit der der Betätigungshebel 17 auf eine Verzahnung des Spannteils aufgepresst ist.

Soweit funktional anwendbar, können auch die Elemente der Ausführungsbeispiele unterschiedlich miteinander kombiniert werden ohne den Bereich der Erfindung zu verlassen. Beispielsweise kann auch für Ausführungsbeispiele, in denen das nicht explizit dargestellt ist, eine Sicherungsmutter 30 zur axialen Sicherung vorgesehen ohne den Bereich der Erfindung zu verlassen.

### Legende zu den Hinweisziffern:

- 1,1': Trageinheit
- 2,2': Stelleinheit
- 3,3': Lenkspindel
- 4,4': Spannvorrichtung
- 5,5': Längsrichtung
- 6,6': Stellrichtung
- 7a,7a': Vorsprung
- 7b: Vertiefung
- 8,8': Verzahnung
- 9,9': Verzahnung
- 10,10': Verzahnung
- 11,11': Verzahnung
- 12: Seitenwange
- 13: Seitenwange
- 14: Zwischeneinheit
- 15: Schwenkachse
- 16,16',16": Spannbolzen
- 17,17': Betätigungshebel
- 18,18': Längsachse
- 19: Schließ-Drehrichtung
- 20,20',20": Spannteil
- 21: Nocken
- 22,22': Gegenspannteil
- 23: Führungsleiste
- 24: Schrägfläche
- 25: Verzahnung
- 26: Zahn
- 27: Durchtrittsöffnung
- 28: Fügefläche
- 29: Durchtrittsöffnung
- 30: Sicherungsmutter
- 31: Gewinde
- 32: Fortsatz
- 33: Verzahnung
- 34: Zahn
- 35: Fortsatz
- 36: Fügefläche
- 37: Verzahnung
- 38: Vertiefung
- 39: Zahn
- 40: Richtung der Aufpressung
- 41: Längsachse
- 42: Ausnehmung

## Patentansprüche

1. Verstellbare Lenksäule für ein Kraftfahrzeug mit einer Spannvorrichtung (4), in deren geöffnetem Zustand die Lenksäule verstellbar ist und in deren geschlossenem Zustand die eingestellte Position der Lenksäule fixiert ist und die einen Betätigungshebel (17) und einen eine Längsachse (18) aufweisenden Spannbolzen (16) aufweist, wobei ein Spannteil (20), welches zum Öffnen und Schließen der Spannvorrichtung (4) vom Betätigungshebel (17) um die Längsachse (18) des Spannbolzens (16) drehbar ist, auf dem Spannbolzen (16) angeordnet ist oder einstückig mit diesem ausgebildet ist, und wobei der Spannbolzen (16) und/oder das Spannteil (20) eine Verzahnung (25, 33, 37) aufweist bzw. aufweisen, welche die Längsachse (18) des Spannbolzens (16) umgibt und deren Zähne (26, 34, 39) in Richtung der Längsachse (18) des Spannbolzens (16) verlaufen und der Betätigungshebel (17) mit einer aus Kunststoff bestehenden Fügefläche (28, 36) bzw. einer jeweiligen solchen Fügefläche auf die Verzahnung (25) des Spannbolzens (16) und/oder auf die Verzahnung (33, 37) des Spannteils (20) aufgepresst ist, wobei die Zähne (26, 34, 39) der Verzahnung (25, 33, 37) bzw. der jeweiligen Verzahnung (25, 33, 37) in die Fügefläche (28, 36) bzw. in die jeweilige Fügefläche (28, 36) des Betätigungshebels (17) zumindest teilweise eingegraben sind, **dadurch gekennzeichnet, dass** der Betätigungshebel (17) mit einer zylindrischen Fügefläche (28, 36), die die Längsachse (18) des Spannbolzens (16) vollumfänglich umgibt, oder mit einer jeweiligen.solchen Fügefläche (28, 36) auf die Verzahnung (25) des Spannbolzens (16) und/oder auf die Verzahnung (33, 37) des Spannteils (20) aufgepresst ist.

2. Verstellbare Lenksäule nach Anspruch 1, **dadurch gekennzeichnet, dass** das Spannteil (20) drehfest mit dem Spannbolzen (16) verbunden ist.

3. Verstellbare Lenksäule nach Anspruch 2, **dadurch gekennzeichnet, dass** das Spannteil (20) auf eine Verzahnung (25) des Spannbolzens (16) aufgepresst ist, welche die Längsachse (18) des Spannbolzens (16) umgibt und deren Zähne (26) in Richtung der Längsachse des Spannbolzens (16) verlaufen, wobei die Zähne (26) der Verzahnung (25) in eine den Spannbolzen (16) umgebende Fügefläche des Spannteils (20) zumindest teilweise eingegraben sind.

4. Verstellbare Lenksäule nach Anspruch 1 oder Anspruch 2, **dadurch gekennzeichnet, dass** das Spannteil (20) und der Betätigungshebel (17) auf dem Spannbolzen (16) gemeinsam um die Längsachse (18) des Spannbolzens (16) drehbar gelagert sind.

5. Verstellbare Lenksäule nach einem der Ansprüche 1 bis 4, **dadurch gekennzeichnet, dass** der Betätigungshebel (17) insgesamt aus Kunststoff besteht.

6. Verstellbare Lenksäule nach einem der Ansprüche 1 bis 5, **dadurch gekennzeichnet, dass** das Spannteil (20) insgesamt aus Metall besteht.

7. Verstellbare Lenksäule nach einem der Ansprüche 1 bis 6, **dadurch gekennzeichnet, dass** der Betätigungshebel (17) bei Überschreiten eines Grenzwertes eines zwischen dem Betätigungshebel (17) und dem Spannteil (20) wirkenden Drehmoments gegenüber dem Spannteil (20) zumindest in eine Drehrichtung um die Längsachse (18) des Spannbolzens (16) verdrehbar ist.

8. Verstellbare Lenksäule nach einem der Ansprüche 1 bis 7, **dadurch gekennzeichnet, dass** zum Schließen der Spannvorrichtung (4) der Betätigungshebel (17) um die Längsachse (18) in eine Schließ-Drehrichtung (19) gedreht wird und das Spannteil (20) vom Betätigungshebel (17) in die Schließ-Drehrichtung (19) mitgenommen wird, wobei das Spannteil (20) im geschlossenen Zustand der Spannvorrichtung (4) gegen eine weitere Drehung in die Schließ-Drehrichtung (19) blockiert ist.

9. Verstellbare Lenksäule nach einem der Ansprüche 1 bis 8, **dadurch gekennzeichnet, dass** das Spannteil (20) mit einem Gegenspannteil (22) zusammenwirkt, das gegenüber der Längsachse (18) des Spannbolzens (16) unverdrehbar gehalten ist, wobei das Spannteil (20) und/oder das Gegenspannteil (22) sich beim Öffnen und Schließen der Spannvorrichtung (4) in axialer Richtung des Spannbolzens (16) verschiebt bzw. verschieben.

10. Verfahren zur Befestigung eines Betätigungshebels (17) einer Spannvorrichtung (4) einer verstellbaren Lenksäule für ein Kraftfahrzeug an einem Spannbolzen (16) und/oder einem Spannteil (20) der Spannvorrichtung (4), in deren geöffnetem Zustand die Lenksäule verstellbar ist und in deren geschlossenem Zustand die eingestellte Position der Lenksäule fixiert ist und zu deren Öffnen und Schließen das Spannteil (20) vom Betätigungshebel (17) um die Längsachse (18) des Spannbolzens (16) drehbar ist, wobei der Spannbolzen (16) und/oder das Spannteil (20) mit einer Verzahnung (25, 33, 37) versehen wird bzw. werden, welche die Längsachse (18, 41) des Spannbolzens (16) bzw. des Spannteils (20) umgibt und deren Zähne (26, 34, 39) in Richtung der Längsachse (18, 41) des Spannbolzens (16) bzw. Spannteils (20) verlaufen und der Betätigungshebel (17) mit einer aus Kunststoff bestehenden Fügefläche (28, 36) bzw. einer jeweiligen solchen Fügefläche auf die Verzahnung (25) des Spannbolzens (16) und/oder auf die Verzahnung (33, 37) des Spannteils (20) aufgepresst wird, wobei die Zähne (26, 34, 39) der Verzahnung (25, 33, 37) bzw. der jeweiligen Verzahnung (25, 33, 37) sich in die Fügefläche (28, 36) bzw. in die jeweilige Fügefläche (28, 36) des Betätigungshebels (17) zumindest teilweise eingraben, **dadurch gekennzeichnet, dass** der Betätigungshebel (17) mit einer zylindrischen Fügefläche (28, 36), die die Längsachse (18, 41) des Spannbolzens (16) bzw. des Spannteils (20) vollumfänglich umgibt, oder mit einer jeweiligen solchen Fügefläche auf die Verzahnung (25) des Spannbolzens (16) und/oder auf die Verzahnung (33, 37) des Spannteils (20) aufgepresst wird.

## Claims

1. An adjustable steering column for a motor vehicle with a tensioning device (4), in the opened state of which the steering column is adjustable and in the closed state of which the set position of the steering column is fixed, and which has an actuating lever (17) and a tensioning bolt (16) having a longitudinal axis (18), wherein a tensioning member (20), which can be rotated about the longitudinal axis (18) of the tensioning bolt (16) by the actuating lever (17) to open and close the tensioning device (4), is arranged on the tensioning bolt (16) or is formed in one piece therewith, and wherein the tensioning bolt (16) and/or the tensioning member (20) has or have a set of teeth (25, 33, 37) which surrounds the longitudinal axis (18) of the tensioning bolt (16) and the teeth (26, 34, 39) of which extend in the direction of the longitudinal axis (18) of the tensioning bolt (16), and the actuating lever (17) is pressed with a jointing surface (28, 36) consisting of plastics material or a respective such jointing surface onto the set of teeth (25) of the tensioning bolt (16) and/or onto the set of teeth (33, 37) of the tensioning member (20), wherein the teeth (26, 34, 39) of the set of teeth (25, 33, 37) or of the respective set of teeth (25, 33, 37) are at least partially sunk into the jointing surface (28, 36) or into the respective jointing surface (28, 36) of the actuating lever (17), **characterised in that** the actuating lever (17) is pressed onto the set of teeth (25) of the tensioning bolt (16) and/or onto the set of teeth (33, 37) of the tensioning member (20) with a cylindrical jointing surface (28, 36) which surrounds the longitudinal axis (18) of the tensioning bolt (16) over its full periphery, or with a respective such jointing surface (28, 36).

2. An adjustable steering column according to Claim 1, **characterised in that** the tensioning member (20) is connected to the tensioning bolt (16) in rotation-resistant manner.

3. An adjustable steering column according to Claim 2, **characterised in that** the tensioning member (20) is pressed onto a set of teeth (25) of the tensioning bolt (16) which surrounds the longitudinal axis (18) of the tensioning bolt (16) and the teeth (26) of which extend in the direction of the longitudinal axis of the tensioning bolt (16), the teeth (26) of the set of teeth (25) being at least partially sunk into a jointing surface of the tensioning member (20) which surrounds the tensioning bolt (16).

4. An adjustable steering column according to Claim 1 or Claim 2, **characterised in that** the tensioning member (20) and the actuating lever (17) are rotatably mounted on the tensioning bolt (16) jointly about the longitudinal axis (18) of the tensioning bolt (16).

5. An adjustable steering column according to one of Claims 1 to 4, **characterised in that** the actuating lever (17) consists overall of plastics material.

6. An adjustable steering column according to one of Claims 1 to 5, **characterised in that** the tensioning member (20) consists overall of metal.

7. An adjustable steering column according to one of Claims 1 to 6, **characterised in that** the actuating lever (17), upon exceeding a limit value of a torque which acts between the actuating lever (17) and the tensioning member (20), can be turned relative to the tensioning member (20) at least in one direction of rotation about the longitudinal axis (18) of the tensioning bolt (16).

8. An adjustable steering column according to one of Claims 1 to 7, **characterised in that** in order to close the tensioning device (4) the actuating lever (17) is turned about the longitudinal axis (18) in a closing direction of rotation (19) and the tensioning member (20) is entrained by the actuating lever (17) in the closing direction of rotation (19), the tensioning member (20) in the closed state of the tensioning device (4) being blocked against further rotation in the closing direction of rotation (19).

9. An adjustable steering column according to one of Claims I to 8, **characterised in that** the tensioning member (20) cooperates with a mating tensioning member (22) which is held non-rotatably relative to the longitudinal axis (18) of the tensioning bolt (16), the tensioning member (20) and/or the mating tensioning member (22) being displaced in the axial direction of the tensioning bolt (16) upon opening and closing the tensioning device (4).

10. A method for fastening an actuating lever (17) of a tensioning device (4) of an adjustable steering column for a motor vehicle on a tensioning bolt (16) and/or a tensioning member (20) of the tensioning device (4), in the opened state of which the steering column is adjustable and in the closed state of which the set position of the steering column is fixed, and for the opening and closing of which the tensioning member (20) can be rotated about the longitudinal axis (18) of the tensioning bolt (16) by the actuating lever (17), wherein the tensioning bolt (16) and/or the tensioning member (20) is or are provided with a set of teeth (25, 33, 37) which surround the longitudinal axis (18, 41) of the tensioning bolt (16) or of the tensioning member (20) and the teeth (26, 34, 39) of which extend in the direction of the longitudinal axis (18, 41) of the tensioning bolt (16) or tensioning member (20), and the actuating lever (17) is pressed with a jointing surface (28, 36) consisting of plastics material or a respective such jointing surface onto the set of teeth (25) of the tensioning bolt (16) and/or onto the set of teeth (33,37) of the tensioning member (20), wherein the teeth (26, 34, 39) of the set of teeth (25, 33, 37) or of the respective set of teeth (25, 33, 37) are at least partially sunk into the jointing surface (28, 36) or into the respective jointing surface (28, 36) of the actuating lever (17), **characterised in that** the actuating lever (17) is pressed onto the set of teeth (25) of the tensioning bolt (16) and/or onto the set of teeth (33, 37) of the tensioning member (20) with a cylindrical jointing surface (28, 36) which surrounds the longitudinal axis (18, 41) of the tensioning bolt (16) or of the tensioning member (20) over its full periphery, or with a respective such jointing surface.

## Revendications

1. Colonne de direction réglable pour un véhicule automobile, comprenant un dispositif de serrage (4) qui, à l'état ouvert, permet le réglage de la colonne de direction et, à l'état fermé, fixe la position réglée de la colonne de direction, et qui présente un levier d'actionnement (17) et un boulon de serrage (16) présentant un axe longitudinal (18), une partie de serrage (20) pouvant être entraînée en rotation par le levier d'actionnement (17) autour de l'axe longitudinal (18) du boulon de serrage (16) pour ouvrir et fermer le dispositif de serrage (4) étant disposée sur le boulon de serrage (16) ou réalisée d'un seul tenant avec celui-ci, et le boulon de serrage (16) et/ou la partie de serrage (20) comprenant une denture (25, 33, 37) entourant l'axe longitudinal (18) du boulon de serrage (16) et dont les dents (26) s'étendent en direction de l'axe longitudinal (18) du boulon de serrage (16), et le levier d'actionnement (17) étant pressé sur la denture (25) du boulon de serrage (16) et/ou sur la denture (33, 37) de la partie de serrage (20) par une surface d'assemblage (28, 36) constituée de matière plastique ou par une telle surface d'assemblage respective, les dents (26, 34, 39) de la denture (25, 33, 37) ou de la denture (25, 33, 37) respective s'insérant au moins en partie dans la surface d'assemblage (28, 36) ou dans la surface d'assemblage (28, 36) respective du levier d'actionnement (17), **caractérisée en ce que** le levier d'actionnement (17) est pressé sur la denture (25) du boulon de serrage (16) et/ou sur la denture (33, 37) de la partie de serrage (20) par une surface d'assemblage cylindrique (28, 36) entourant entièrement l'axe longitudinal (18) du boulon de serrage (16) ou par une telle surface d'assemblage (28, 36) respective.

2. Colonne de direction réglable selon la revendication 1, **caractérisée en ce que** la partie de serrage (20) est accouplée solidaire en rotation au boulon de serrage (16).

3. Colonne de direction réglable selon la revendication 2, **caractérisée en ce que** la partie de serrage (20) est pressée sur une denture (25) du boulon de serrage (16) entourant l'axe longitudinal (18) du boulon de serrage (16) et dont les dents (26) s'étendent en direction de l'axe longitudinal du boulon de serrage (16), les dents (26) de la denture (25) étant insérées au moins en partie dans une surface d'assemblage de la partie de serrage (20) entourant le boulon de serrage (16).

4. Colonne de direction réglable selon la revendication 1 ou la revendication 2, **caractérisée en ce que** la partie de serrage (20) et le levier d'actionnement (17) sont montés sur le boulon de serrage (16) de manière à pouvoir être entraînés ensemble en rotation autour de l'axe longitudinal (18) du boulon de serrage (16).

5. Colonne de direction réglable selon l'une quelconque des revendications 1 à 4, **caractérisée en ce que** le levier d'actionnement (17) est entièrement constitué de matière plastique.

6. Colonne de direction réglable selon l'une quelconque des revendications 1 à 5, **caractérisée en ce que** la partie de serrage (20) est entièrement constituée de métal.

7. Colonne de direction réglable selon l'une quelconque des revendications 1 à 6, **caractérisée en ce que** le levier d'actionnement (17), lorsqu'une valeur limite d'un couple intervenant entre le levier d'actionnement (17) et la partie de serrage (20) est dépassée, peut être entraîné en rotation par rapport à la partie de serrage (20) au moins dans un sens de rotation autour de l'axe longitudinal (18) du boulon de serrage (16).

8. Colonne de direction réglable selon l'une quelconque des revendications 1 à 7, **caractérisée en ce que** pour la fermeture du dispositif de serrage (4), le levier d'actionnement (17) est entraîné en rotation autour de l'axe longitudinal (18) dans un sens de rotation de fermeture (19) et la partie de serrage (20) est entraînée par le levier d'actionnement (17) dans le sens de rotation de fermeture (19), la partie de serrage (20), avec le dispositif de serrage (4) à l'état fermé, étant empêchée d'effectuer une autre rotation dans le sens de rotation de fermeture (19).

9. Colonne de direction réglable selon l'une quelconque des revendications 1 à 8, **caractérisée en ce que** la partie de serrage (20) coopère avec une partie de serrage antagoniste (22), laquelle est retenue de manière à ne pas pouvoir tourner par rapport à l'axe longitudinal (18) du boulon de serrage (16), la partie de serrage (20) et/ou la partie de serrage antagoniste (22), lors de l'ouverture et de la fermeture du dispositif de serrage (4), se déplaçant dans la direction axiale du boulon de serrage (16).

10. Procédé de fixation d'un levier d'actionnement (17) d'un dispositif de serrage (4) d'une colonne de direction réglable pour un véhicule automobile sur un boulon de serrage (16) et/ou une partie de serrage (20) du dispositif de serrage (4), qui, à l'état ouvert, permet le réglage de la colonne de direction et, à l'état fermé, fixe la position réglée de la colonne de direction, et pour l'ouverture et la fermeture duquel la partie de serrage (20) peut être entraînée en rotation par le levier d'actionnement (17) autour de l'axe longitudinal (18) du boulon de serrage (16), le boulon de serrage (16) et/ou la partie de serrage (20) étant pourvus d'une denture (25, 33, 37) entourant l'axe longitudinal (18, 41) du boulon de serrage (16) ou de la partie de serrage (20) et dont les dents (26, 34, 39) s'étendent en direction de l'axe longitudinal (18, 41) du boulon de serrage (16) ou de la partie de serrage (20), et le levier d'actionnement (17) étant pressé sur la denture (25) du boulon de serrage (16) et/ou sur la denture (33, 37) de la partie de serrage (20) par une surface d'assemblage (28, 36) constituée de matière plastique ou par une telle surface d'assemblage respective, les dents (26, 34, 39) de la denture (25, 33, 37) ou de la denture (25, 33, 37) respective s'insérant au moins en partie dans la surface d'assemblage (28, 36) ou dans la surface d'assemblage (28, 36) respective du levier d'actionnement (17), **caractérisé en ce que** le levier d'actionnement (17) est pressé sur la denture (25) du boulon de serrage (16) et/ou sur la denture (33, 37) de la partie de serrage (20) par une surface d'assemblage cylindrique (28, 36) entourant entièrement l'axe longitudinal (18, 41) du boulon de serrage (16) ou de la partie de serrage (20) ou par une telle surface d'assemblage respective.
